# EUROPEAN PATENT SPECIFICATION

(11) **EP 3 843 412 B1**
(45) Date of publication and mention of the grant of the patent: **25.03.2026**
(21) Application number: 20216335.8
(22) Date of filing: 22.12.2020
(51) Int. Cl.: H04N 21/2343, H04N 21/4402, H04N 21/24

(54) **METHOD AND APPARATUS FOR MANAGING REDUNDANT SEGMENTED STREAMS**
VERFAHREN UND VORRICHTUNG ZUR VERWALTUNG REDUNDANTER SEGMENTIERTER STRÖME
PROCÉDÉ ET APPAREIL DE GESTION DE FLUX SEGMENTÉS REDONDANTS

(30) Priority: 23.12.2019 US 201916725936
(43) Date of publication of application: 30.06.2021
(73) Proprietor: Comcast Cable Communications, LLC, Philadelphia, PA 19103 (US)
(72) Inventor: GILADI, Alexander, Philadelphia, PA Pennsylvania 19103 (US)
(74) Representative: V.O.

(56) References cited:
- CN-A- 106 452 666
- US-A1- 2015 271 498
- US-A1- 2019 082 198
- US-B1- 9 317 377

## Description

### BACKGROUND

Redundant transcoders may comprise separate physical encoders that transcode the same channel. Transcoder outputs are perceptually identical; however, they may come from a broadcaster facility in different formats or via different paths. Because the transcoder outputs are identical, they can be used interchangeably for playback at a client computing device.

In order to achieve efficient content delivery network (CDN) distribution, it is beneficial to propagate fewer versions of the encoded content. Accordingly, there is a need for improved methods and apparatuses for distributing segmented video streams.
US 9317377 B1 discloses a single-ended optimized storage protocol enables storage clients or other devices to direct a remote data storage to copy data. In response to commands via the protocol, a remote data storage can copy portions of a data stream at the remote data storage to destination storage locations within the same or a different data stream. The protocol may be utilized for optimized transfer of data via a network to a remote data storage. An initial data stream is divided into segments. Redundant segments are removed from the data stream to form an optimized data stream, which is transferred to the remote data storage.
US 2015/271 498 A1 discloses a method of coding video data includes coding one or more non-video coding layer (VCL) network abstraction layer (NAL) units of a layer of a multi-layer bitstream, where the one or more non-VCL NAL units contain a decoded picture hash SEI message.

### SUMMARY

The claimed invention proposes a method, device and system according to the independent claims. Further advantageous embodiments are disclosed in the dependent claims. Systems and methods are described herein to cause reliable detection of equivalent time-aligned video segments and to cause a reduction in the number of versions of encoded content propagated via a content delivery network (CDN). Redundant encoders may send versions of the same video segment to the CDN for redundancy purposes. A server in the CDN may determine, based on information in a video segment, that the video segment may have been encoded based on source frames that are bit-wise or perceptually identical to source frames of a previously received video segment. The server may then discard the identical video segment so that the redundant copy is not saved in the CDN thereby causing efficiency improvements such as storage savings and reducing the traffic on the CDN.

### BRIEF DESCRIPTION OF THE DRAWINGS

The following drawings show generally, by way of example, but not by way of limitation, various examples discussed in the present disclosure. In the drawings:
FIG. 1 shows an example system;
FIG. 2 shows an example message with an embedded hash value;
FIG. 3 shows an example method;
FIG. 4 shows an example method;
FIG. 5 shows an example method;
FIG. 6 shows an example method; and
FIG. 7 depicts an example computing device.

### DETAILED DESCRIPTION OF ILLUSTRATIVE EMBODIMENTS

Systems and methods are described herein for processing video data. The systems and methods described herein process segmented video streams and cause a reduction in the number of versions of encoded content propagated via a content delivery network (CDN). A plurality of encoders may be used by a video source for redundancy purposes. The redundant encoders may send redundant versions of the same video segment to the CDN. Using the techniques disclosed herein, only one copy of a content item is saved on the CDN. A server in the CDN may determine, based on information in a video segment, that the video segment may have been encoded based on source frames that are bit-wise or perceptually identical to source frames of a previously received video segment. The server may then discard the identical video segment so that the redundant copy is not saved on the server thereby causing efficiency improvements such as storage savings and reducing the traffic on the CDN.

Video data used in the embodiments described herein may comprise video frames or other images. Video frames may comprise pixels. A pixel may comprise a smallest controllable element of a video frame. A video frame may comprise bits for controlling each associated pixel. A portion of the bits for an associated pixel may control a luma value (e.g., light intensity) of each associated pixel. A portion of the bits for an associated pixel may control one or more chrominance value (e.g., color) of the pixel. The video may be processed by a video codec comprising an encoder and decoder. When video data is transmitted from one location to another, the encoder may encode the video (e.g., into a compressed format) using a compression technique prior to transmission. The decoder may receive the compressed video and decode the video (e.g., into a decompressed format).

Encoding video may comprise partitioning a frame of video data into a plurality of coding tree units (CTUs) or macroblocks that each comprising a plurality of pixels. CTUs may be partitioned into coding units (CUs). Macroblocks may be partitioned into partitions. The encoder may generate a prediction of each current CU based on previously encoded data. The prediction may comprise intra-prediction, which is based on previously encoded data of the current frame being encoded. The prediction may comprise inter-prediction, which is based on previously encoded data of a previously encoded reference frame. The inter-prediction stage may comprise determining a prediction unit (PU) (e.g., a prediction area) using motion compensation by determining a PU that best matches a prediction region in the CU. The encoder may generate a residual signal by determining a difference between the determined PU from the prediction region in the CU. The residual signals may then be transformed using, for example, a discrete cosine transform (DCT), which may generate coefficients associated with the residuals. The encoder may then perform a quantization process to quantize the coefficients. The transformation and quantization processes may be performed on transform units (TUs) based on partitions of the CUs. The compressed bitstream comprising video frame data may then be transmitted by the encoder. The transmitted compressed bitstream may comprise the quantized coefficients and information to enable the decoder to regenerate the prediction blocks, such as motion vector associated with the motion compensation. The decoder may receive the compressed bitstream and may decode the compressed bitstream to regenerate the video content.

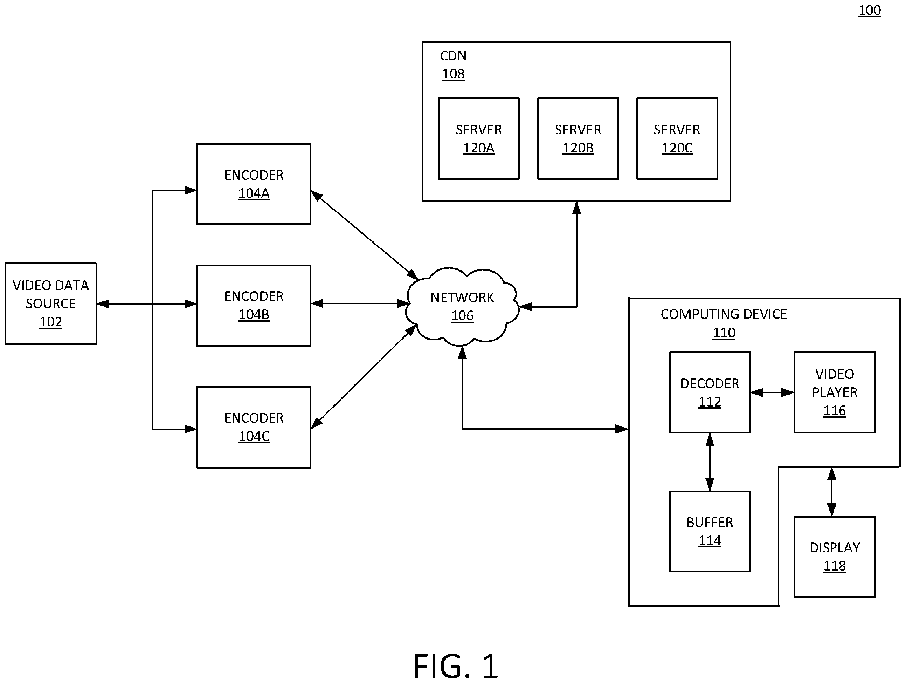

FIG. 1 shows system 100 configured for video processing. The system 100 may comprise a video data source 102, one or more encoders 104A, 104B, 104C, a CDN 108, and a computing device 110. The system 100 may be configured to propagate only one version of encoded content to servers in the CDN 108 to improve the efficiency of CDN video distribution. The techniques for video processing described herein are applicable to any delivery method including but not limited to Dynamic Adaptive Streaming over Hypertext Transfer Protocol (HTTP) (DASH), HTTP Live Streaming (HLS), the QAM digital television standard, and adaptive bitrate (ABR) streaming.

The video data source 102, the one or more encoders 104A, 104B, 104C, the CDN 108, the computing device 110, and/or any other component of the system 100 may be interconnected via a network 106. The network 106 may comprise a wired network, a wireless network, or any combination thereof. The network 106 may comprise a public network, such as the Internet. The network 106 may comprise a private network, such as a content provider's distribution system. The network 106 may communicate using technologies such as WLAN technology based on the Institute of Electrical and Electronics Engineers (IEEE) 802.11 standard, wireless cellular technology, Bluetooth, coaxial cable, Ethernet, fiber optics, microwave, satellite, Public Switched Telephone Network (PTSN), Digital Subscriber Line (DSL), BPL, or any other appropriate technologies.

The computing device 110 may comprise a television, a monitor, a laptop, a desktop, a smart phone, a set-top box, a cable modem, a gateway, a tablet, a wearable computing device, a mobile computing device, any computing device configured to receive and/or playback video, the like, and/or any combination of the foregoing. The computing device 110 may comprise a decoder 112, a buffer 114, and a video player 116. The computing device 110 (e.g., the video player 116) may be communicatively connected to a display 118. The display 118 may be a separate and discrete component from the computing device 110, such as a television display connected to a set-top box. The display 118 may be integrated with the computing device 110. The decoder 112, the video player 116, the buffer 114, and the display 118 may be realized in a single device, such as a laptop or mobile device. The decoder 112 may decompress/decode encoded video data. The encoded video data may be received from the one or more encoders 104A, 104B, 104C or the CDN 108.

The video data source 102 may comprise a broadcast source, a headend, a video on-demand server, a cable modem termination system, the like, and/or any combination of the foregoing. The video data source 102 may send uncompressed, raw video data comprising a sequence of frames. The sequence of frames may be segmented. The video data source 102 may receive requests for video data from the one or more encoders 104A, 104B, 104C, the computing device 110, or the CDN 108.

The one or more encoders 104A, 104B, 104C may comprise encoders, which for redundancy encode/transcode the same content received from the video data source 102. The video data source 102 and the one or more encoders 104A, 104B, 104C may be incorporated into a single device. The video data source 102 and the one or more encoders 104A, 104B, 104C may be co-located at a premises. The video data source 102 may send uncompressed video data to the one or more encoders 104A, 104B, 104C based on a request for video from the one or more encoders 104A, 104B, 104C, the computing device 110, or the CDN 108.

The CDN 108 may comprise one or more servers 120A, 120B, 120C. The one or more servers 120A, 120B, 120C of the CDN 108 may be configured to act as intermediary servers located between the computing device 110 and the video data source 102. The one or more servers 120A, 120B, 120C of the CDN 108 may serve cached content to the computing device 110. The cached content may comprise video content such as one or more video segments. The CDN 108 may receive a request for video from the computing device 110. The CDN 108 may authorize/authenticate the request and/or the computing device 110 from which the request originated. The request for video data may comprise a request for a channel, a video on-demand asset, a website address, a video asset associated with a streaming service, the like, and/or any combination of the foregoing. The CDN 108 may send the request to the video data source 102.

The video data source 102 may transmit requested uncompressed video data to the one or more encoders 104A, 104B, 104C. The pathway of the video to each encoder of the one or more encoders 104A, 104B, 104C may be different. For example, a first encoder of the one or more encoders 104A, 104B, 104C may receive the video via a fiber connection, a second encoder of the one or more encoders 104A, 104B, 104C may receive the video via a satellite connection, and a third encoder of the one or more encoders 104A, 104B, 104C may receive the video via a wireless connection.

The one or more encoders 104A, 104B, 104C may receive the uncompressed video data from the video data source 102 (either through the same channel/format or via different ones as in the aforementioned example). The one or more encoders 104A, 104B, 104C may then encode (e.g., compress) the uncompressed video data to generate the requested encoded video data. The one or more encoders 104A, 104B, 104C may apply global motion compensation (GMC) during encoding. The one or more encoders 104A, 104B, 104C may transmit the encoded video data to the requesting component, such as the CDN 108 or the computing device 110. The CDN 108 may transmit the requested encoded video data to the requesting computing device 110.

In accordance with the embodiments described herein, content is analyzed for purposes of deduplicating the content. For example, the one or more servers 120A, 120B, 120C of the CDN 108 may determine whether a segment of video received from the one or more encoders 104A, 104B, 104C is a duplicate of a segment of video that was previously received.

Segment equivalence may be established by a bitwise comparison between the same segment coming from different encoders. However, this is only reliable when the encoders have identical settings, identical timing, and identical deterministic execution. The latter is hard to achieve with a 100% certainty, so while bitwise identical segments may appear frequently, there may be a number of different segments due to non-determinism inherent in any general-purpose operating system (for example, due to process and thread scheduling, non-encoding processes, etc.). Moving Picture Experts Group (MPEG)-2 transport streams (TS) may also exhibit slightly differing program clock reference (PCR) values or PCR locations. Further, segments will not be bitwise identical when the sources have different formats. For example, when a first encoder receives an original uncompressed signal such as a serial digital interface (SDI) signal or a Society of Motion Picture and Television Engineers (SMPTE) 2110 signal and a second encoder receives an 18MB MPEG-2 video over a satellite connection, the segments will never be bitwise-identical.

In accordance with the techniques described herein, the one or more encoders 104A, 104B, 104C may be synchronized in terms of random access point locations (e.g., instantaneous decoder refresh (IDR) frame locations) so that video segments sent by the one or more encoders 104A, 104B, 104C are time-aligned. When content is encoded by an encoder of the one or more encoders 104A, 104B, 104C, the encoder may calculate a hash function (such as CRC, MD5, SHA-1, or SHA-3) of each source frame to generate a hash value indicative of the source frame content. The encoder may then embed the hash value in the video segment. The hash value may be embedded in a message in the video segment. The aforementioned message may be, for example, embedded in a Network Abstraction Layer (NAL) unit (such as supplemental enhancement information (SEI)), in an 'emsg' message, in a separate track in International Organization for Standardization (ISO) base media file format (BMFF), in a non-payload part of a Packetized Elementary Stream (PES), or in a TS packet in an MPEG-2 TS.

A server of one or more servers 120A, 120B, 120C of the CDN 108 may then determine whether two or more video segments are redundant by analyzing the hash values embedded in the segments. The server compares the hash values (or a single aggregate value such as a hash of hash values), and if there is a direct match of hash values between two segments (e.g., the hash values of two segments are identical), the server determines that the segments are based on the same source frame and therefore are identical. This determination is successful whenever video inputs (e.g., the source frames) into the one or more encoders 104A, 104B, 104C are bitwise-identical. For example, the video inputs would be bit-wise identical when the one or more encoders 104A, 104B, 104C comprise redundant encoders that are receiving the same video from the video data source 102 in the same format.

If there is no match based on the hash values between video segments, the server may determine whether the segments are perceptually identical. The server decodes the video segments and calculates a quality metric across the frames of the video segments. The quality metric may comprise peak signal-to-noise ratio (PSNR) or multi-scale Structural Similarity (MS-SSIM). High values of the quality metric may indicate that the sequence of video frames or segments are perceptually identical. For example, if the weighted PSNR values for 8-bit sequences are higher than 35dB, the segments can be determined to be identical with a high probability. Alternatively or additionally, duplicate segments may be determined based on information such as video descriptors associated with the video segments. Consecutive frames may be compared to generate the video descriptors. The encoder may calculate a video descriptor for the sequence or each source frame. These descriptors may comprise quantized histograms. For example, the quantized histograms may comprise colors or gradients. The histograms may match or have very small differences, indicating that the segments are perceptually identical, for identical input source frame(s) even when those inputs were modified during transmission (e.g., modified formats or transmission pathways). Similarly, the differences between two consecutive frames may be compared.

The encoder may also embed the descriptors, such as the histograms, in a message in the video segment using the same techniques described above for embedding the hash values in the video segment. For example, the descriptors may be sent by the encoder using a message carriage mechanism such as an NAL unit, an ISO-BMFF box, or track.

When the server determines that the segments are the same, based on the segments being bit-wise identical, having identical source frames, or being perceptually the same, the server then discards the identical video segment so that the redundant copy is not saved on the server thereby causing efficiency improvements such as storage savings and reducing the traffic on the CDN 108.

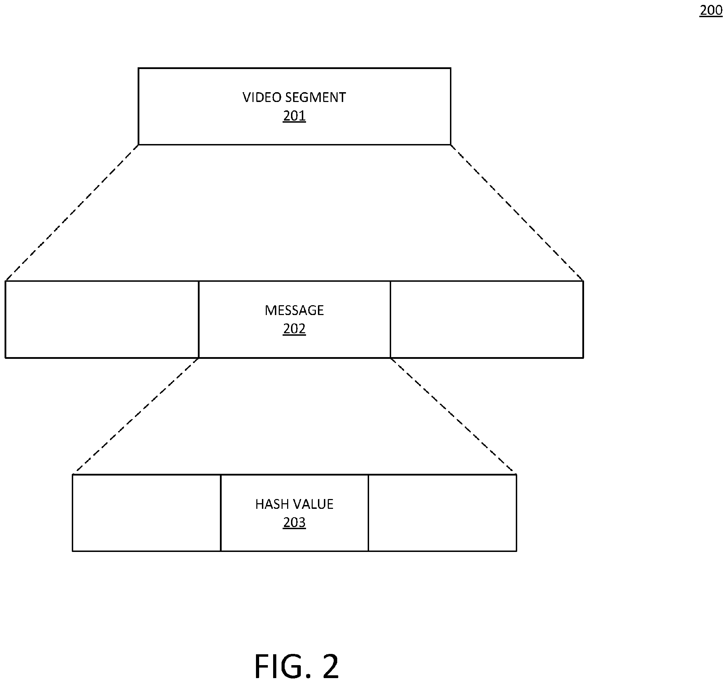

FIG. 2 shows an example message structure 200 that may be configured to embed a hash value of a source video frame in accordance with one embodiment, which may be used in combination with any of the embodiments described herein. The example of FIG. 2 shows a video segment 201. The video segment 201 may comprise a message 202, which comprises a hash value 202 of a source video frame. The hash value may have been embedded by an encoder during encoding of the video segment 201.

The message 202, comprising the hash value 203, may comprise a prefix or postfix SEI message, ISO-BMFF box at the beginning of the segment, or a MPEG-2 TS descriptor. When the message is embedded in an ISO-BMFF, the embedding may be done as an in band emsg message payload in a file-level box or in a box within the "moof" box. When the message is embedded in a MPEG-2 TS descriptor, the message may be carried inside a descriptor in an adaptation field of an MPEG-2 TS packet that is carrying the start of the frame. Alternatively, the message may be carried in a separate PES stream with presentation timestamp (PTS) and decoding time stamp (DTS) values identical to the values of PTS and DTS of the frame in question.

One or more servers in a CDN, which receive the video segment 201, may compare the hash value 203 (or a single aggregate value such as a hash of hash values) with the hash value of another video segment. If there is a direct match of hash values between two segments (e.g., the hash values of two segments are identical), it may determine that the segments are perceptually identical.

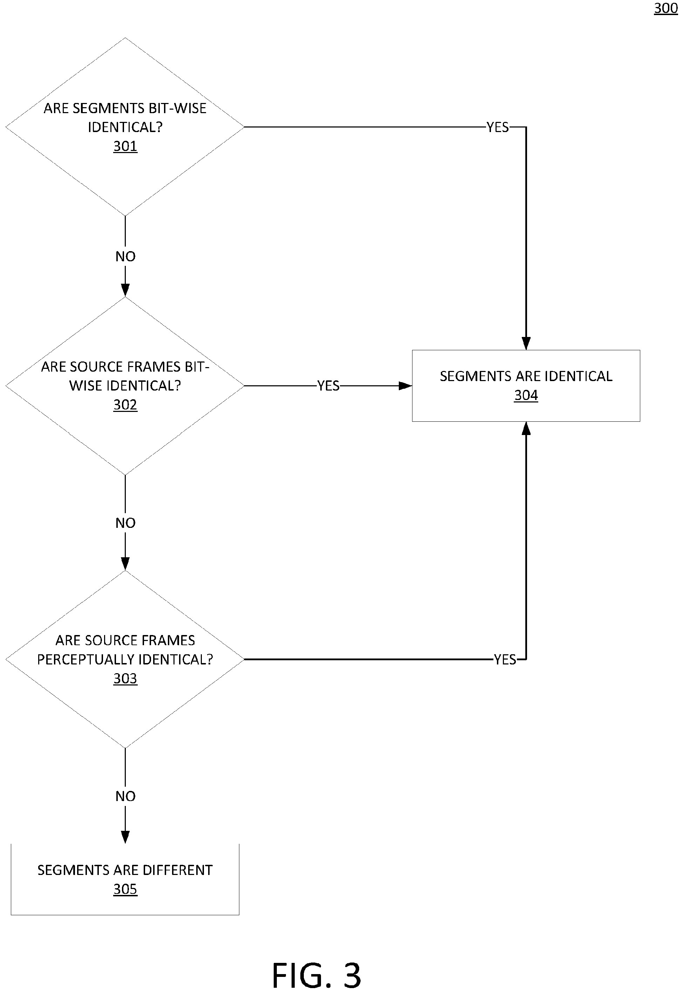

FIG. 3 shows an example method 300. The method 300 of FIG. 3 may be performed, for example by the one or more encoders 104A, 104B, 104C, the computing device 110, or the CDN 108 of FIG. 1. While each step in the method 300 of FIG. 3 is shown and described separately, multiple steps may be executed in a different order than what is shown, in parallel with each other, or concurrently with each other. At step 301, a server of one or more servers 120A, 120B, 120C of the CDN 108 determines whether two or more video segments received, from an encoder of the one or more encoders 104A, 104B, 104C, are bit-wise identical. If they are bit-wise identical, the server determines that the segments are identical (step 304).

If the segments are not bit-wise identical, at step 302, the server determines whether the source frames in the two or more video segments received, from the encoder, are identical by analyzing the hash values embedded in the segments. The server compares the hash values embedded in the segments (or a single aggregate value such as a hash of hash values), and if there is a direct match of hash values between the segments (e.g., the hash values of two segments are identical), the server determines that the segments are identical (step 304). This determination is successful whenever video inputs (e.g., the source frames) into the one or more encoders 104A, 104B, 104C are bitwise-identical. For example, the video inputs would be bit-wise identical when the one or more encoders 104A, 104B, 104C comprise redundant encoders that are receiving the same video from the video data source 102 in the same format.

If there is no match based on the hash values between video segments, at step 303, the server determines whether the source frames are perceptually identical. The server decodes the video segments and calculates a quality metric across the frames of the video segments. The quality metric may comprise peak signal-to-noise ratio (PSNR) or multi-scale Structural Similarity (MS-SSIM). High values of the quality metric may indicate that the sequence of video frames or segments are identical (step 304). For example, if the weighted PSNR values for 8-bit sequences are higher than 35dB, the segments can be determined to be identical with a high probability. The server may also determine duplicate segments based on information such as video descriptors associated with the video segments. Consecutive frames, pixel by pixel, may be compared to generate the video descriptors. The encoder may calculate a video descriptor for the sequence or each source frame. These descriptors may comprise quantized histograms. For example, the quantized histograms may comprise colors or gradients. The histograms may match (or be very close in the Euclidean sense) for an identical input even when those inputs that were modified during transmission, which may indicate that the segments are identical (step 304). Low values of the quality metric or video descriptors that do not match may indicate that the source frames are different (step 305).

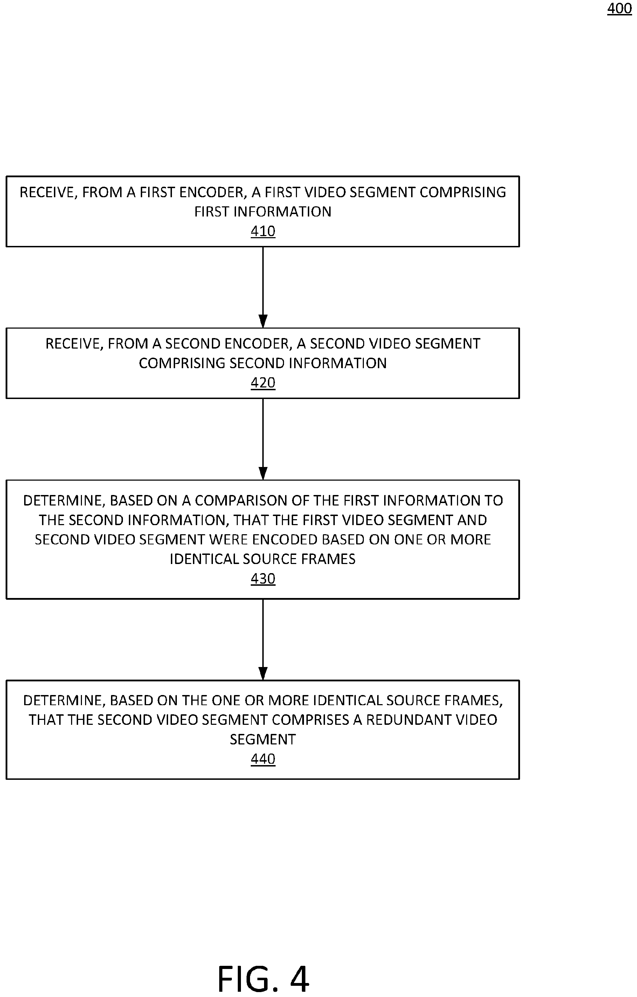

FIG. 4 shows an example method 400. The method 400 of FIG. 4 may be performed, for example, by the one or more encoders 104A, 104B, 104C, the computing device 110, or a server of one or more servers 120A, 120B, 120C of the CDN 108 of FIG. 1. While each step in the method 400 of FIG. 4 is shown and described separately, multiple steps may be executed in a different order than what is shown, in parallel with each other, or concurrently with each other. At step 410, a server of the one or more servers 120A, 120B, 120C of the CDN 108 receive from a first encoder of the one or more encoders 104A, 104B, 104C a first video segment comprising first information. The first information comprises a first hash value determined based on one or more first source frames received by the first encoder. The first hash value was embedded in the first video segment by the first encoder. The first hash value may have been embedded in at least one of: an SEI message, an ISO BMFF box, or an MPEG-2 TS descriptor. Alternatively or additionally, the first information indicates first perceptual data associated with the first video segment such as at least one of: PSNR, MS-SSIM, or a histogram of colors or gradients.

At step 420, the server receives from a second encoder of the one or more encoders 104A, 104B, 104C a second video segment comprising second information. The second information comprises a second hash value determined based on one or more second source frames received by the second encoder. The second hash value was embedded in the second video segment by the second encoder. The second hash value may have been embedded in at least one of: an SEI message, an ISO BMFF box, or an MPEG-2 TS descriptor. Alternatively or additionally, the second information indicates second perceptual data associated with the second video segment such as at least one of: PSNR, MS-SSIM, or a histogram of colors or gradients.

At step 430, the server determines, based on a comparison of the first information to the second information, that the first video segment and second video segment were encoded based on one or more identical source frames. Step 430 may be in response to determining that the first video segment and the second video segment are not bit-wise identical.

At step 440, the server may determine, based on the one or more identical source frames, that the second video segment comprises a redundant video segment. The server may determine not to store the redundant video segment in the CDN.

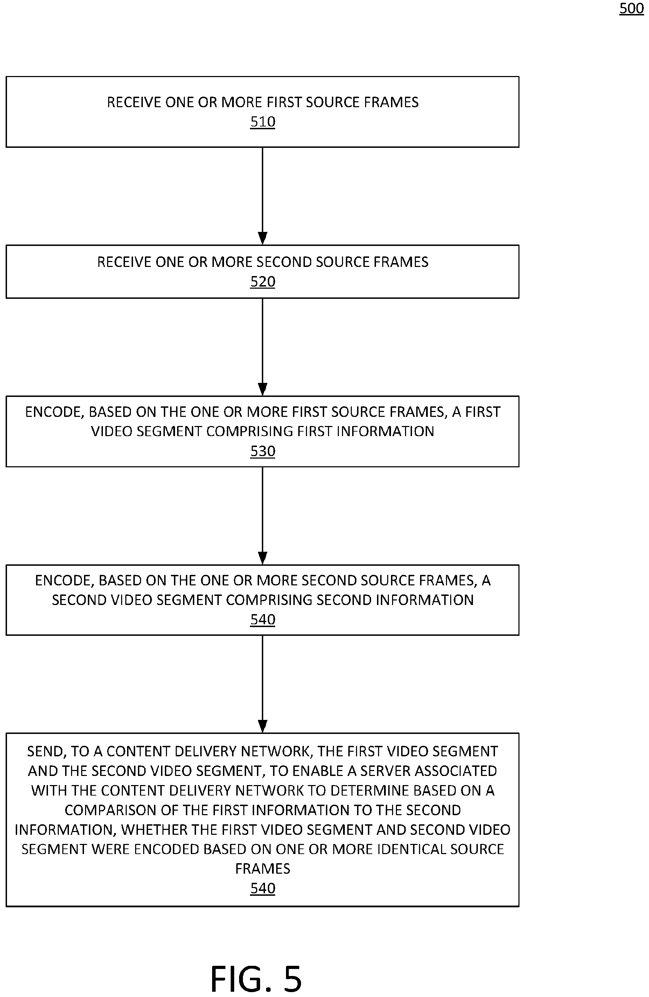

FIG. 5 shows an example method 500. The method 500 of FIG. 5 may be performed, for example, by the one or more encoders 104A, 104B, 104C, the computing device 110, or a server of one or more servers 120A, 120B, 120C of the CDN 108 of FIG. 1. While each step in the method 500 of FIG. 5 is shown and described separately, multiple steps may be executed in a different order than what is shown, in parallel with each other, or concurrently with each other.

At step 510, the one or more encoders 104A, 104B, 104C receive one or more first source frames. The one or more first source frames may have been received via a fiber connection.

At step 520, the one or more encoders 104A, 104B, 104C receive one or more second source frames. The one or more second source frames may have been received via a satellite connection. The one or more second source frames may be received by the same or a different encoder of the one or more encoders 104A, 104B, 104C as in step 510.

At step 530, the one or more encoders 104A, 104B, 104C encode, based on the one or more first source frames, a first video segment comprising first information. The first information comprises a first hash value determined based on the one or more first source frames. The first hash value may have been embedded in at least one of: an SEI message, an ISO BMFF box, or an MPEG-2 TS descriptor. Alternatively or additionally, the first information indicates first perceptual data associated with the first video segment such as at least one of: PSNR, MS-SSIM, or a histogram of colors or gradients.

At step 540, the one or more encoders 104A, 104B, 104C encode, based on the one or more second source frames, a second video segment comprising second information. The second information comprises a second hash value determined based on the one or more second source frames. The second hash value may have been embedded in at least one of: an SEI message, an ISO BMFF box, or an MPEG-2 TS descriptor. Alternatively or additionally, the second information indicates second perceptual data associated with the second video segment such as at least one of: PSNR, MS-SSIM, or a histogram of colors or gradients.

At step 550, the one or more encoders 104A, 104B, 104C send, to a content delivery network, the first video segment and the second video segment, to enable a server associated with the content delivery network to determine based on a comparison of the first information to the second information, whether the first video segment and second video segment were encoded based on one or more identical source frames.

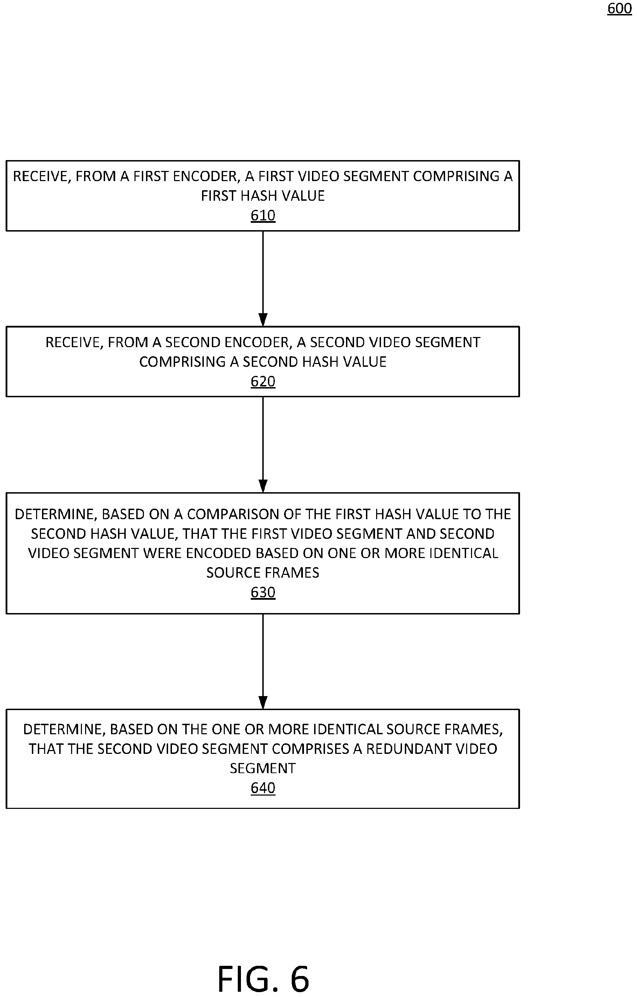

FIG. 6 shows an example method 600. The method 600 of FIG. 6 may be performed, for example, by the one or more encoders 104A, 104B, 104C, the computing device 110, or a server of one or more servers 120A, 120B, 120C of the CDN 108 of FIG. 1. While each step in the method 600 of FIG. 6 is shown and described separately, multiple steps may be executed in a different order than what is shown, in parallel with each other, or concurrently with each other.

At step 610, a server of the one or more servers 120A, 120B, 120C of the CDN 108 receives from a first encoder of the one or more encoders 104A, 104B, 104C a first video segment comprising a first hash value. The first hash value was determined based on one or more first source frames received by the first encoder. The first hash value was embedded in the first video segment by the first encoder. The first hash value may have been embedded in at least one of: an SEI message, an ISO BMFF box, or an MPEG-2 TS descriptor.

At step 620, the server receives from a second encoder of the one or more encoders 104A, 104B, 104C a second video segment comprising a second hash value. The second hash value was determined based on one or more second source frames received by the second encoder. The second hash value was embedded in the second video segment by the second encoder. The second hash value may have been embedded in at least one of: an SEI message, an ISO BMFF box, or an MPEG-2 TS descriptor.

At step 630, the server may determine, based on a comparison of the first hash value to the second hash value, that the first video segment and second video segment were encoded based on one or more identical source frames. Step 630 may be in response to determining that the first video segment and the second video segment are not bit-wise identical

At step 640, the server may determine, based on the one or more identical source frames, that the second video segment comprises a redundant video segment. The server may determine not to store the redundant video segment in the CDN.

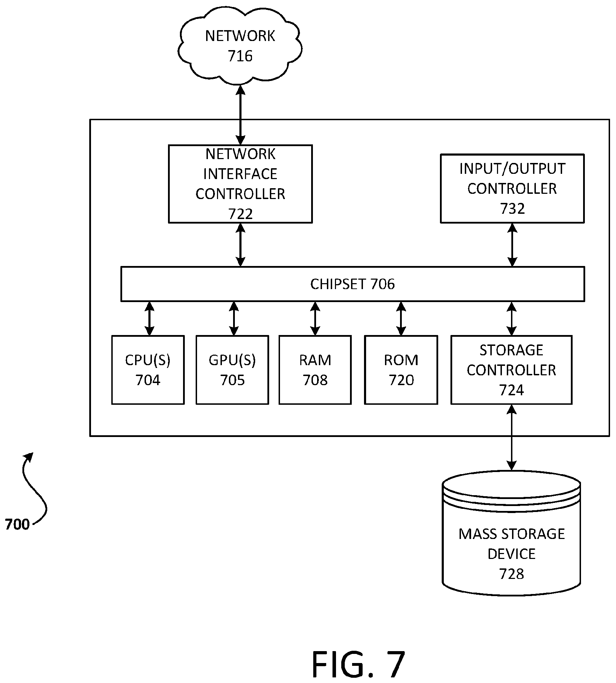

FIG. 7 depicts a computing device 700 that may be used in various aspects, such as the servers, encoders, computing device, and other devices depicted in FIG. 1. With regard to the example architectures of FIG. 1, the devices may each be implemented in an instance of a computing device 700 of FIG. 7. The computer architecture shown in FIG. 7 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIGs. 3-6.

The computing device 700 may include a baseboard, or "motherboard," which is a printed circuit board to which a multitude of components or devices may be connected by way of a system bus or other electrical communication paths. One or more central processing units (CPUs) 704 may operate in conjunction with a chipset 706. The CPU(s) 704 may be standard programmable processors that perform arithmetic and logical operations necessary for the operation of the computing device 700.

The CPU(s) 704 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 704 may be augmented with or replaced by other processing units, such as GPU(s) 705. The GPU(s) 705 may comprise processing units specialized for but not necessarily limited to highly parallel computations, such as graphics and other visualization-related processing.

A chipset 706 may provide an interface between the CPU(s) 704 and the remainder of the components and devices on the baseboard. The chipset 706 may provide an interface to a random access memory (RAM) 708 used as the main memory in the computing device 700. The chipset 706 may further provide an interface to a computer-readable storage medium, such as a read-only memory (ROM) 720 or non-volatile RAM (NVRAM) (not shown), for storing basic routines that may help to start up the computing device 700 and to transfer information between the various components and devices. ROM 720 or NVRAM may also store other software components necessary for the operation of the computing device 700 in accordance with the aspects described herein.

The computing device 700 may operate in a networked environment using logical connections to remote computing nodes and computer systems through local area network (LAN) 716. The chipset 706 may include functionality for providing network connectivity through a network interface controller (NIC) 722, such as a gigabit Ethernet adapter. A NIC 722 may be capable of connecting the computing device 700 to other computing nodes over a network 716. It should be appreciated that multiple NICs 722 may be present in the computing device 700, connecting the computing device to other types of networks and remote computer systems.

The computing device 700 may be connected to a mass storage device 728 that provides non-volatile storage for the computer. The mass storage device 728 may store system programs, application programs, other program modules, and data, which have been described in greater detail herein. The mass storage device 728 may be connected to the computing device 700 through a storage controller 724 connected to the chipset 706. The mass storage device 728 may consist of one or more physical storage units. A storage controller 724 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 700 may store data on a mass storage device 728 by transforming the physical state of the physical storage units to reflect the information being stored. The specific transformation of a physical state may depend on various factors and on different implementations of this description. Examples of such factors may include, but are not limited to, the technology used to implement the physical storage units and whether the mass storage device 728 is characterized as primary or secondary storage and the like.

For example, the computing device 700 may store information to the mass storage device 728 by issuing instructions through a storage controller 724 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope of the appended claims, with the foregoing examples provided only to facilitate this description. The computing device 700 may further read information from the mass storage device 728 by detecting the physical states or characteristics of one or more particular locations within the physical storage units.

In addition to the mass storage device 728 described herein, the computing device 700 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 700.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 728 depicted in FIG. 7, may store an operating system utilized to control the operation of the computing device 700. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 728 may store other system or application programs and data utilized by the computing device 700.

The mass storage device 728 or other computer-readable storage media may also be encoded with computer-executable instructions, which, when loaded into the computing device 700, transforms the computing device from a general-purpose computing system into a special-purpose computer capable of implementing the aspects described herein. These computer-executable instructions transform the computing device 700 by specifying how the CPU(s) 704 transition between states, as described herein. The computing device 700 may have access to computer-readable storage media storing computer-executable instructions, which, when executed by the computing device 700, may perform the methods described in relation to FIGs. 3-6.

A computing device, such as the computing device 700 depicted in FIG. 7, may also include an input/output controller 732 for receiving and processing input from a number of input devices, such as a keyboard, a mouse, a touchpad, a touch screen, an electronic stylus, or other type of input device. Similarly, an input/output controller 732 may provide output to a display, such as a computer monitor, a flat-panel display, a digital projector, a printer, a plotter, or other type of output device. It will be appreciated that the computing device 700 may not include all of the components shown in FIG. 7, may include other components that are not explicitly shown in FIG. 7, or may utilize an architecture completely different than that shown in FIG. 7.

As described herein, a computing device may be a physical computing device, such as the computing device 700 of FIG. 7. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems described herein are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

The present methods and systems may be understood more readily by reference to the following detailed description of preferred embodiments and the examples included therein and to the Figures and their descriptions.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its operations be performed in a specific order. Accordingly, where a method claim does not actually recite an order to be followed by its operations or it is not otherwise specifically stated in the claims or descriptions that the operations are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

It will be apparent to those skilled in the art that various modifications and variations may be made without departing from the scope of the independent claims. Other embodiments will be apparent to those skilled in the art from consideration of the specification and practices described herein. It is intended that the specification and example figures be considered as exemplary only, with a true scope being indicated by the following claims.

## Claims

1. A method comprising:
receiving (410, 610), from a first encoder (104A, 104B, 104C), a first video segment comprising first information which comprises a first hash value determined based on one or more first source frames received by the first encoder (104A, 104B, 104C) and/or indicates first perceptual data associated with the first video segment , wherein the first information was embedded in the first video segment by the first encoder (104A, 104B, 104C);
receiving (420, 620), from a second encoder (104A, 104B, 104C), a second video segment comprising second information which comprises a second hash value determined based on one or more second source frames received by the second encoder (104A, 104B, 104C) and/or indicates second perceptual data associated with the second video segment, wherein the second information was embedded in the second video segment by the second encoder (104A, 104B, 104C), wherein the first and second perceptual data comprises at least one of: peak signal-to-noise ratio (PSNR), multi-scale Structural Similarity (MS-SSIM), or a histogram of colors or gradients;
determining (301, 302, 303, 430, 630, 640), based on a comparison of the first information to the second information, that the first video segment and second video segment were encoded based on one or more identical source frames indicating that the second video segment comprises a redundant video segment; and
causing, based on the indication that the second video segment comprises the redundant video segment, deduplication of the second video segment.

2. The method of claim 1, wherein the determining that the first video segment and second video segment were encoded based on one or more identical source frames is in response to determining that the first video segment and the second video segment are not bit-wise identical.

3. The method of any of claims 1 or 2, wherein the first hash value was embedded in the first video segment by the first encoder (104A, 104B, 104C), wherein the second hash value was embedded in the second video segment by the second encoder (104A, 104B, 104C).

4. The method of claims 1-3, wherein the first hash value is included in at least one of: a supplemental enhancement information (SEI) message, a International Organization for Standardization (ISO) base media file format (BMFF) box, or a Moving Picture Experts Group (MPEG)-2 transport streams (TS) descriptor.

5. The method of claims 1-4, wherein the second hash value is included in at least one of: a supplemental enhancement information (SEI) message, a International Organization for Standardization (ISO) base media file format (BMFF) box, or a Moving Picture Experts Group (MPEG)-2 transport streams (TS) descriptor.

6. The method of claims 1-5, wherein the redundant video segment is not stored by one or more servers associated with a content delivery network.

7. The method of claims 1-6, wherein the first video segment is received via a fiber connection, wherein the second video segment is received via a satellite connection.

8. A device (120A, 120B, 120C) comprising:
one or more processors; and
memory storing instructions that, when executed by the one or more processors, cause the device to perform the method of any of claims 1-7.

9. A computer-readable medium storing instructions that, when executed, perform the method of any one of claims 1-7.

10. A system (100) comprising:
one or more computing devices (104A, 104B, 104C); and
a first computing device of the one or more computing devices (104A, 104B, 104C), in communication a second computing device of the one or more computing devices (104A, 104B, 104C), and configured to perform the method of any one of claims 1-7.

## Patentansprüche

1. Verfahren, umfassend:
Empfangen (410, 610), von einem ersten Encoder (104A, 104B, 104C), eines ersten Videosegments mit ersten Informationen, die einen auf der Grundlage eines oder mehrerer vom ersten Encoder (104A, 104B, 104C) empfangenen ersten Quellframes bestimmten ersten Hashwert aufweisen, und/oder die dem ersten Videosegment zugeordnete erste wahrnehmungsbezogene Daten angeben, wobei die ersten Informationen durch den ersten Encoder (104A, 104B, 104C) in das erste Videosegment eingebettet wurden;
Empfangen (420, 620), von einem zweiten Encoder (104A, 104B, 104C), eines zweiten Videosegments mit zweiten Informationen, die einen auf der Grundlage eines oder mehrerer die vom zweiten Encoder (104A, 104B, 104C) empfangenen zweiten Quellframes bestimmten zweiten Hashwert aufweisen, und/oder die dem zweiten Videosegment zugeordnete zweite wahrnehmungsbezogene Daten angeben, wobei die zweiten Informationen durch den zweiten Encoder (104A, 104B, 104C) in das zweite Videosegment eingebettet wurden, wobei die ersten und zweiten wahrnehmungsbezogenen Daten mindestens eines der folgenden Merkmale umfassen: Spitzen-Signal-Rausch-Verhältnis (*Peak Signal- to* - *Noise Ratio* - PSNR), Multi-Scale Structural Similarity (MS-SSIM) oder ein Histogramm von Farben oder Gradienten;
Bestimmen (301, 302, 303, 430, 630, 640), basierend auf einem Vergleich der ersten Informationen mit den zweiten Informationen, dass das erste Videosegment und das zweite Videosegment basierend auf einem oder mehreren identischen Quellframes codiert wurden, wodurch angegeben wird, dass das zweite Videosegment ein redundantes Videosegment umfasst; und
Veranlassen, basierend auf der Angabe, dass das zweite Videosegment das redundante Videosegment umfasst, einer Deduplizierung des zweiten Videosegments.

2. Verfahren nach Anspruch 1,wobei das Bestimmen, dass das erste Videosegment und das zweite Videosegment basierend auf einem oder mehreren identischen Quellframes codiert wurden, als Reaktion auf das Bestimmen erfolgt, dass das erste Videosegment und das zweite Videosegment nicht bitweise identisch sind.

3. Verfahren nach einem der Ansprüche 1 oder 2, wobei der erste Hashwert durch den ersten Encoder (104A, 104B, 104C) in das erste Videosegment eingebettet wurde, wobei der zweite Hashwert durch den zweiten Encoder (104A, 104B, 104C) in das zweite Videosegment eingebettet wurde.

4. Verfahren nach einem der Ansprüche 1 bis 3, wobei der erste Hashwert in mindestens einer der folgenden Strukturen enthalten ist: einer Supplemental-Enhancement-Information-(SEI-)Nachricht, einer Box des von der Internationalen Organisation für Normung (*International Organization for Standardization -* ISO) definierten Basismedien-Dateiformats (*base media file format* - BMFF), oder einem Descriptor eines Moving-Picture-Experts-Group-(MPEG)-2-Transportstreams (TS).

5. Verfahren nach einem der Ansprüche 1 bis 4, wobei der zweite Hashwert in mindestens einer der folgenden Strukturen enthalten ist: einer Supplemental-Enhancement-Information-(SEI-)Nachricht, einer Box des von der Internationalen Organisation für Normung (*International Organization for Standardization -* ISO) definierten Basismedien-Dateiformats (*Base media file format* - BMFF), oder einem Descriptor eines Moving-Picture-Experts-Group-(MPEG)-2-Transportstreams (TS).

6. Verfahren nach den Ansprüchen 1 bis 5, wobei das redundante Videosegment nicht von einem oder mehreren Servern gespeichert wird, die einem Content Delivery Network zugeordnet sind.

7. Verfahren nach den Ansprüchen 1 bis 6, wobei das erste Videosegment über eine Glasfaserverbindung empfangen wird, wobei das zweite Videosegment über eine Satellitenverbindung empfangen wird.

8. Vorrichtung (120A, 120B, 120C), umfassend:
einen oder mehrere Prozessoren; und
Speicher zum Speichern von Befehlen, die bei ihrer Ausführung durch den einen oder die mehreren Prozessoren die Vorrichtung veranlassen, das Verfahren nach einem der Ansprüche 1 bis 7 auszuführen.

9. Computerlesbares Medium, das Befehle speichert, die bei ihrer Ausführung das Verfahren nach einem der Ansprüche 1 bis 7 auszuführen.

10. System (100), umfassend:
eine oder mehrere Computervorrichtungen (104A, 104B, 104C); und
eine erste Computervorrichtung der einen oder mehreren Computervorrichtungen (104A, 104B, 104C), die mit einer zweiten Computervorrichtung der einen oder mehreren Computervorrichtungen (104A, 104B, 104C) in Kommunikation steht und konfiguriert ist, um das Verfahren nach einem der Ansprüche 1 bis 7 auszuführen.

## Revendications

1. Procédé comprenant :
la réception (410, 610), depuis un premier codeur (104A, 104B, 104C), d'un premier segment vidéo comprenant une première information qui comprend une première valeur de hachage déterminée sur la base d'une ou plusieurs premières trames sources reçues par le premier codeur (104A, 104B, 104C) et/ou indique une première donnée perceptive associée au premier segment vidéo, dans lequel la première information a été incorporée au premier segment vidéo par le premier codeur (104A, 104B, 104C) ;
la réception (420, 620), depuis un deuxième codeur (104A, 104B, 104C), d'un deuxième segment vidéo comprenant une deuxième information qui comprend une deuxième valeur de hachage déterminée sur la base d'une ou plusieurs deuxièmes trames sources reçues par le deuxième codeur (104A, 104B, 104C) et/ou indique une deuxième donnée perceptive associée au deuxième segment vidéo, dans lequel la deuxième information a été incorporée au deuxième segment vidéo par le deuxième codeur (104A, 104B, 104C), dans lequel la première et deuxième donnée perceptive comprend au moins l'un parmi : un rapport du pic de signal sur bruit (PSNR, *peak signal-to-noise ratio*), une Similarité Structurelle multi-échelle (MS-SSIM, *multi-scale Structural Similarity*) ou un histogramme de couleurs ou de gradients ;
le fait de déterminer (301, 302, 303, 430, 630, 640), sur la base d'une comparaison de la première information avec la deuxième information, que le premier segment vidéo et le deuxième segment vidéo ont été codés sur la base d'une ou plusieurs trames sources identiques indiquant que le deuxième segment vidéo comprend un segment vidéo redondant ; et
le fait de provoquer, sur la base de l'indication indiquant que le deuxième segment vidéo comprend le segment vidéo redondant, une déduplication du deuxième segment vidéo.

2. Procédé selon la revendication 1, dans lequel le fait de déterminer que le premier segment vidéo et le deuxième segment vidéo ont été codés sur la base d'une ou plusieurs trames sources identiques vient en réponse au fait de déterminer que le premier segment vidéo et le deuxième segment vidéo ne sont pas identiques bit à bit.

3. Procédé selon l'une quelconque des revendications 1 ou 2, dans lequel la première valeur de hachage a été incorporée au premier segment vidéo par le premier codeur (104A, 104B, 104C), dans lequel la deuxième valeur de hachage a été incorporée au deuxième segment vidéo par le deuxième codeur (104A, 104B, 104C).

4. Procédé selon les revendications 1 à 3, dans lequel la première valeur de hachage est incluse dans au moins l'un parmi : un message d'information d'amélioration complémentaire (SEI, *supplemental enhancement information*)*,* une boîte de format de fichier multimédia de base (BMFF, *base media file format*) Organisation Internationale de Normalisation (ISO, *International Organization for Standardization*) ou un descripteur de flux de transport (TS, *transport streams*) Groupe d'Experts en Images Animées (MPEG, *Moving Pictures Experts Group*)-2.

5. Procédé selon les revendications 1 à 4, dans lequel la deuxième valeur de hachage est incluse dans au moins l'un parmi : un message d'information d'amélioration complémentaire (SEI), une boîte de format de fichier multimédia de base (BMFF) Organisation Internationale de Normalisation (ISO) ou un descripteur de flux de transport (TS) Groupe d'Experts en Images Animées (MPEG)-2.

6. Procédé selon les revendications 1 à 5, dans lequel le segment vidéo redondant n'est pas stocké par un ou plusieurs serveurs associés à un réseau de diffusion de contenu.

7. Procédé selon les revendications 1 à 6, dans lequel le premier segment vidéo est reçu via une connexion par fibre, dans lequel le deuxième segment vidéo est reçu via une connexion par satellite.

8. Dispositif (120A, 120B, 120C) comprenant :
un ou plusieurs processeurs ; et
une mémoire stockant des instructions qui, lorsqu'elles sont exécutées par les un ou plusieurs processeurs, amène le dispositif à réaliser le procédé selon l'une quelconque des revendications 1 à 7.

9. Support lisible par ordinateur stockant des instructions qui, lorsqu'elles sont exécutées, réalisent le procédé selon l'une quelconque des revendications 1 à 7.

10. Système (100) comprenant :
un ou plusieurs dispositifs de calcul (104A, 104B, 104C) ; et
un premier dispositif de calcul parmi les un ou plusieurs dispositifs de calcul (104A, 104B, 104C), en communication avec un deuxième dispositif de calcul parmi les un ou plusieurs dispositifs de calcul (104A, 104B, 104C), et configuré pour réaliser le procédé selon l'une quelconque des revendications 1 à 7.
